# EUROPEAN PATENT APPLICATION

(11) **EP 1 564 732 A2**
(43) Date of publication of application: **17.08.2005**
(21) Application number: 05250913.0
(22) Date of filing: 17.02.2005
(51) Int. Cl.: G11B 7/22

(54) **Disk device provided with substrate at top and method of manufacturing disk device with simplified adjusting step**

(30) Priority: 17.02.2004 JP 2004039851; 17.02.2004 JP 2004040294
(71) Applicant: ORION ELECTRIC CO., Ltd., Takefu-City, Fukui 915-8555 (JP)
(72) Inventor: Ishizumi, Norihiro, c/o Orion Electric Co., Ltd., Takefu-city, Fukui 915-8555 (JP); Tsunemoto, Kinichi, c/o Orion Electric Co., Ltd., Takefu-city, Fukui 915-8555 (JP); Nishide, Masahiko, c/o Orion Electric Co., Ltd., Takefu-city, Fukui 915-8555 (JP)
(74) Representative: Paget, Hugh Charles Edward

(57) **Abstract**

The present invention provides ease of attachment and adjustment in manufacturing steps and ease of maintenance, repair work, and safety, and eliminate necessity for jig substrate for adjustment so as to reduce cost.

In a disk device 1 provided with a pickup unit and a traverse unit, wherein a pickup substrate and the like is electrically connected to the control substrate 12 after the control substrate 12 is placed at the top of the disk device, the pickup unit is adjusted after a short-circuit between an anode electrode and cathode electrode of a laser light-emitting element provided in the pickup unit is disconnected, and the operation of the pickup unit in the adjusting step is controlled using the control substrate 12. After the pickup unit is adjusted, the control substrate 12 is attached to the top end of side walls on both sides of a frame 11 and placed at the top of the disk device 1.

## Description

### BACKGROUND OF THE INVENTION

### Field of the Invention

The present invention relates to a disk device which reproduces/records images from/onto an optical disk provided with a control substrate which controls a traverse provided in the disk device at the top of the disk device and a substrate capable of reducing man-hours of solder short-circuit related to a pickup at the top of the disk device, and a method of manufacturing a disk device with a simplified adjusting step.

In response to various needs of users, a disk device in recent years is not only built in a DVD player or a CD player and the like, but also built in a television receiver and the like, and in this way the use of the disk device is extending over a wide range. Moreover, these electrical equipments, and the like are becoming smaller and thinner year after year.

Since there is not much space inside such a smaller, thinner electrical equipment and the like, and various devices and parts are mounted at high density, operability in attachment of such devices and parts in manufacturing steps, maintenance, and repair tend to decrease. Therefore, a disk device built in the electrical equipment is required to meet requirements for a reduction in size, ease in attachment and adjustment in manufacturing steps, ease and safety of work in maintenance and repair, and the like.

To meet such requirements, Japanese Patent Laid-Open Publication No. H07-272474 (Patent Document 1) discloses a prior art which facilitates inspection of a disk device during a service check such as repair of the disk device and Japanese Patent Laid-Open Publication No. H10-334643 (Patent Document 2) discloses a prior art which facilitates assembly in manufacturing of an electrical equipment and the like, with a built-in disk device.

Furthermore, since various devices and parts are built in an electrical equipment at high density as shown above, there is a problem that the weights of these devices and parts cause deflections and the like in a housing that constitutes the body of the electrical equipment. In addition, many of these various devices and parts built in the electrical equipment generate heat during operation, which produces a considerably high temperature inside the electrical equipment accompanied by high-density mounting of parts, creating a situation in which the housing making up the body of the electrical equipment is further likely to deflections.

In response to various needs of users, the disk device is not only built in a DVD player or a CD player and the like, but also built in a television receiver and the like, and its use is extending over a wide range. Therefore, the disk device is modularized to enhance versatility, and in manufacturing steps of the disk device, the disk device as a single unit is inspected and adjusted and the like.

As one of the adjusting steps of the disk device, there is a step of adjusting a pickup lens of a pickup unit provided in the disk device in such a way that it keeps an appropriate distance from a disk medium and is kept parallel to the disk medium. This step is intended to enable a signal to be accurately read from or written onto the disk medium.

On the other hand, a substrate (hereinafter referred to as "pickup substrate") which inputs/outputs a signal to/from the pickup unit provided in the pickup unit is provided with a circuit which short-circuits between an anode electrode and cathode electrode of a laser light-emitting element through soldering and when the pickup substrate and disk device control substrate and the like are not connected, they are short-circuited by soldering. This is because a laser light-emitting element is vulnerable to static electricity and the anode electrode and cathode electrode of the laser light-emitting element are short-circuited to prevent static electricity from flowing into the laser light-emitting element so as to prevent the laser light-emitting element from deteriorating or being destroyed by static electricity received from the operator and the like. When the pickup substrate and disk device control substrate and the like are electrically connected, static electricity hardly flows into the laser light-emitting element, therefore, there is no need for any solder short-circuit.

As described above, when the pickup substrate and disk device control substrate and the like are not connected, the anode electrode and cathode electrode of the laser light-emitting element are short-circuited by soldering, however, the laser light-emitting element cannot perform a light-emitting operation in such a solder short-circuited condition, therefore, it is necessary to remove solder in order for the laser light-emitting element to emit light. Consequently, when the pickup substrate, jig circuit substrate, or control substrate of the disk device are connected or separated for inspection or adjustment in manufacturing steps of the disk device, it is necessary to repeat soldering and perform a removal of solder a plurality of times. However, repeating such soldering and removing of solder is a complicated operation and may also damage the pickup substrate and the like.

Japanese Patent Laid-Open Publication No. H11-238248 (Patent Document 3) discloses such a prior art related to solder short-circuit. The prior art disclosed in Patent Document 3 is intended to prevent solder balls or flux from infiltrating into a connector part connecting the substrates when the pickup substrate, jig circuit substrate, or control substrate and the like of the disk device are connected during an operation of removing solder short-circuit.

As shown above, a smaller, thinner electrical equipment and the like is in a condition in which the housing which constitutes the body of the electrical equipment is likely to produce deflections and the like. From the standpoint of ease of manufacturing and cost reduction, the frame part making up the disk device is mostly made of resin, and therefore, the disk device built in the electrical equipment may also be deformed due to heat inside the electrical equipment and deflections of the housing, preventing normal operation. Furthermore, since the front part must have an opening for loading/unloading a disk medium, and the top part generally only has a support section for supporting a clamper, the disk device has many openings in its structure and cannot always have sufficient strength although the frame making up the disk device generally has a box shape.

Furthermore, the prior art disclosed in Patent Document 1 needs to remove the disk device from the electrical equipment and the like during a service check such as repair, expose the back of the disk device by inclining the disk device and continue the operation so as to look into the inclined disk device, making the operation very complicated.

Furthermore, the conventional manufacturing steps of the disk device consist of assembling/manufacturing a traverse unit provided with a pickup unit, a turn table, a spindle motor, and the like, and a control substrate which controls the disk device separately, and attaching the traverse unit and the control substrate and the like to the frame of the disk device, while the step of adjusting the pickup unit provided in the traverse unit is performed with the traverse unit alone before attaching the traverse unit to the disk device. In other words, in the state in which the traverse unit is placed on a jig stand, a jig circuit substrate for adjustment (which serves as a substitute for the control substrate) and the pickup substrate and the like are connected to adjust the pickup lens to be kept at an appropriate distance from the disk medium and parallel to the disk medium. Therefore, as described above, it is necessary to attach or detach solder short-circuit before and after the connection or separation between the pickup substrate and jig circuit substrate to protect the laser light-emitting element on the pickup substrate, and there are some cases that such attachment and detachment of the solder short-circuit may damage the pickup substrate since the operation is complicated.

### SUMMARY OF THE INVENTION

The present invention has been implemented in view of the above described problems. Its first object of the present invention is to provide a disk device with excellent strength and at the same time a disk device provided with a substrate at the top which provides ease of assembly and adjustment in manufacturing steps, and ease of work and safety during maintenance and repair. Its second object of the present invention is to provide a method of manufacturing a disk device with a simplified adjusting step capable of reducing man-hours for solder short-circuit related to the pickup in the manufacturing steps of the disk device, eliminating the necessity for the jig substrate for adjustment, thereby reducing cost.

The disk device provided with the substrate at the top according to the first aspect of the invention comprises a pickup unit which reads, reproduces, or records information from/onto a disk medium, a traverse unit, a turn table which rotates/drives the disk medium, a spindle motor which rotates the turn table, and the like. All of these components are assembled in a frame, wherein a control substrate which controls the traverse unit or the spindle motor and the like or a signal input/output to/from the pickup unit is provided at the top of the disk device.

"Top of the disk device" refers to a top surface of the disk device on the side on which a clamper (together with the turn table to sandwich the disk) exists when placed in a so-called horizontal position. According to the above described arrangement, even when the disk device is set in an electrical equipment and the like, the control substrate remains exposed.

The disk device provided with the substrate at the top according to the second aspect of the invention is the substrate provided with a substrate at the top according to the first aspect of the invention, wherein the range of irradiation with laser light irradiated by at least the pickup unit is covered with the control substrate.

According to the above described arrangement, laser light irradiated by the pickup unit is shielded by the control substrate and does not directly irradiate the outer side of the disk device.

The disk device provided with the substrate at the top according to the third aspect of the invention is the disk device provided with the substrate at the top according to the first or the second aspect of the invention, wherein one or a plurality of projections to be fitted into holes formed in the control substrate are provided at top ends of one or both side walls of the frame and one or a plurality of bosses for fixing the control substrate with screws are provided at top ends of the other side wall or both side walls of the frame.

According to the above described arrangement, the side part of the frame and the control substrate are connected by a screw and the like, and the disk device consists of the control substrate and the frame integrated as a single body with fewer openings.

The disk device provided with the substrate at the top according to the fourth aspect of the invention is the disk device provided with the substrate at the top according to the third aspect of the invention, wherein a support section for supporting a clamper is formed in the frame and the support section is provided with a substrate support section for fixing the control substrate.

According to the above described arrangement, the frame and the clamper support section, and the control substrate are mutually supported and connected.

The disk device provided with the substrate at the top according to the fifth aspect of the invention is the disk device provided with a substrate at the top according to any one of the first to the fourth aspect of the invention, wherein a side wall of the frame is provided with cable holding means for holding a wire for connecting the control substrate to a power supply substrate or other control substrate and the like.

According to the above described arrangement, a wire such as a flat cable for connecting the control substrate to the power supply substrate or other control substrate is held and fixed by the cable holding means.

The disk device provided with the substrate at the top according to the sixth aspect of the invention is the disk device provided with the substrate at the top according to the fifth aspect of the invention, wherein the flat cables for inputs/outputs between the control substrate and the disk device are concentrated on one side of the frame and flat cables for inputs/outputs between the control substrate and the power supply substrate are concentrated on the other side.

According to the above described arrangement, the flat cables related to inputs/outputs between the control substrate and the disk device are concentrated on the right or left side of the frame which constitutes the disk device and the flat cables related to inputs/outputs between the control substrate and power supply substrate are concentrated on the side opposite thereto.

The method of manufacturing a disk device with a simplified adjusting step according to the seventh aspect of the invention is a method of manufacturing a disk device which reads, reproduces, or records information from/onto a disk medium, comprising a step of electrically connecting a substrate which inputs/outputs a signal to/from a pickup unit provided in a traverse unit set in the disk device and a control substrate which controls the disk device, a step of disconnecting short-circuit between an anode electrode and cathode electrode of a laser light-emitting element provided in the pickup unit and an adjusting step of adjusting the pickup unit, wherein the operation of the pickup unit in the adjusting step is controlled using the control substrate.

According to the above described arrangement, it is possible to control the operation of the pickup unit in the step of adjusting the pickup lens of the pickup unit in such a way that it is kept to an appropriate distance and angle with respect to the disk medium using the control substrate which is a component of the disk device as a product and there is no need to provide any jig substrate for adjustment separately.

The method of manufacturing a disk device with a simplified adjusting step according to the eighth aspect of the invention is a method of manufacturing a disk device which reads, reproduces, or records information from/onto a disk medium, comprising a step of attaching the traverse unit to the frame, a step of placing the control substrate at the top of the disk device, a step of electrically connecting a substrate which inputs/outputs a signal to/from a pickup unit provided in the traverse unit and the control substrate, a step of disconnecting short-circuit between an anode electrode and cathode electrode of a laser light-emitting element provided in the pickup unit and an adjusting step of adjusting the pickup unit, wherein the operation of the pickup unit in the adjusting step is controlled using the control substrate.

According to the above described arrangement, the traverse unit is attached to the disk device in the step of adjusting the pickup unit. Furthermore, in the step of adjusting the pickup unit, the disk device is sent with the control substrate placed at the top of the disk device, and therefore, it is possible to move the control substrate as appropriate in the step of adjusting the pickup unit.

The method of manufacturing a disk device with a simplified adjusting step according to the ninth aspect of the invention is a method of manufacturing a disk device which reads, reproduces, or records information from/onto a disk medium, comprising a step of attaching a traverse unit to a frame of the disk device, a step of attaching a control substrate that controls the disk device to the disk device, a step of electrically connecting a substrate which inputs/outputs a signal to/from a pickup unit provided in the traverse unit and the control substrate, a step of disconnecting short-circuit between an anode electrode and cathode electrode of a laser light-emitting element provided in the pickup unit and an adjusting step of adjusting the pickup unit, wherein the operation of the pickup unit in the adjusting step is controlled using the control substrate.

According to the above described arrangement, the control substrate is attached to the disk device in the step of adjusting the pickup unit.

According to the disk device according to the first aspect of the invention comprising a pickup unit which reads, reproduces, or records information from/onto a disk medium, a traverse unit, a turn table which rotates/drives the disk medium, a spindle motor which rotates the turn table, and the like, in which all these components being assembled in a frame, wherein a control substrate which controls the traverse unit or the spindle motor and the like, or a signal input/output to/from the pickup unit is provided at the top of the disk device and the like, wherein the control substrate remains exposed, which facilitates assembly in manufacturing steps, eliminates the necessity to provide any jig substrate for inspection separately in the adjusting step and the like, and can shorten the manufacturing steps and reduce cost even when the disk device provided with the control substrate at the top is set in an electrical equipment. Furthermore, during maintenance and repair of the products according to the disk device provided with the substrate at the top, the control substrate remains exposed even when the disk device is set in the electrical equipment, which facilitates work.

According to the second aspect of the invention, which is the disk device provided with the substrate at the top according to the first aspect of the invention, wherein the range of irradiation with laser light irradiated by at least the pickup unit is covered with the control substrate, and the light irradiated by the pickup unit is shielded by the control substrate and does not directly irradiate the outer side of the disk device. Therefore, it is possible to effectively prevent accidents such that the operator may directly view the laser light. Furthermore, since the pickup unit is covered with the control substrate, the dust-proofing effect for the optical head of the pickup is achieved.

According to the third aspect of the invention, which is the disk device provided with the substrate at the top according to the first or the second aspect of the invention, one or a plurality of projections to be fitted into holes formed in the control substrate are provided at top ends of one or both side walls of the frame and one or a plurality of bosses for fixing the control substrate with screws are provided at top ends of the other side wall or both side walls of the frame, and the disk device provided with the substrate at the top consists of the control substrate and the frame integrated as a single body with fewer openings, which improves the strength and prevents operation faults due to deflections or torsion. Further, reduced deflections or torsion can minimize play in the movable parts and make the device as small as possible. Furthermore, a combination of projection to be engaged with a hole formed in the control substrate and boss for screwing the control substrate allows the control substrate to be attached easily with only a single screw, and hence, it is possible to reduce the number of operation steps and cost.

According to the fourth aspect of the invention, which is the disk device provided with the substrate at the top according to the third aspect of the invention, wherein a support section for supporting a clamper is formed in the frame and the support section is provided with a substrate support section for fixing the control substrate, and the frame and clamper support section and control substrate are mutually supported and connected, thereby enabling to increase strength.

According to the fifth aspect of the invention, which is the disk device provided with a substrate at the top according to any one of the first to the fourth aspect of the invention, wherein a side wall of the frame is provided with cable holding means for holding a wire for connecting the control substrate to a power supply substrate or other control substrate and the like, a wire such as a flat cable for connecting the control substrate to the power supply substrate or other control substrate is held and fixed by the cable holding means, thereby enabling to prevent a problem that a wire contacts the heat-generating part or movable part of the electrical equipment in which the disk device provided with the substrate at the top is built-in, causing trouble.

According to the sixth aspect of the invention, which is the disk device provided with the substrate at the top according to the fifth aspect of the invention, wherein the flat cables for inputs/outputs between the control substrate and the disk device are concentrated on one side of the frame and flat cables for inputs/outputs between the control substrate and the power supply substrate are concentrated on the other side, thereby enabling an easy attachment/detachment of the control substrate when the disk device provided with the substrate at the top is in maintenance or repair.

According to the seventh aspect of the invention, which is a method of manufacturing a disk device which reads, reproduces, or records information from/onto a disk medium with a simplified adjusting step, comprising a step of electrically connecting a substrate which inputs/outputs a signal to/from a pickup unit provided in a traverse unit set in the disk device and a control substrate which controls the disk device, a step of disconnecting short-circuit between an anode electrode and cathode electrode of a laser light-emitting element provided in the pickup unit and an adjusting step of adjusting the pickup unit, wherein the operation of the pickup unit in the adjusting step is controlled using the control substrate, the pickup substrate and control substrate which is a component of the disk device as a product are electrically connected before the adjusting step of the pickup unit thereby eliminating the need to provide a jig substrate for adjustment separately in the adjusting step of the pickup unit. Therefore, it is possible to reduce cost, eliminate the need for any attaching/detaching operation between the pickup substrate and the jig substrate which reduces man-hours. Furthermore, since there is no attachment/detachment between the pickup substrate and the jig substrate which eliminates the necessity for attachment/detachment of solder short-circuit of the pickup substrate, man-hours are further reduced and it is possible to limit attachment/detachment of solder short-circuit of the pickup substrate to detachment of solder short-circuit only one time, which reduces the possibility that the pickup substrate and the like may be damaged.

According to the eighth aspect of the invention which is a method of manufacturing a disk device which reads, reproduces, or records information from/onto a disk medium with a simplified adjusting step, comprising a step of attaching the traverse unit to the frame, a step of placing the control substrate at the top of the disk device, a step of electrically connecting a substrate which inputs/outputs a signal to/from a pickup unit provided in the traverse unit and the control substrate, a step of disconnecting short-circuit between an anode electrode and cathode electrode of a laser light-emitting element provided in the pickup unit, and an adjusting step of adjusting the pickup unit, wherein the operation of the pickup unit in the adjusting step is controlled using the control substrate, and the disk device is sent with the control substrate placed at the top of the disk device in the adjusting step of the pickup unit. Therefore, it is possible to move the control substrate in the pickup unit adjusting step, thereby adjusting the control substrate to the adjusting jig stand as appropriate. Furthermore, since the pickup unit is adjusted with the traverse unit attached to the disk device, no error occurs during attachment compared to the case where the pickup unit is adjusted by the traverse unit alone and then the traverse unit is attached to the disk device, thereby improving the accuracy of adjustment.

According to the ninth aspect of the invention which is a method of manufacturing a disk device which reads, reproduces, or records information from/onto a disk medium with a simplified adjusting step, comprising a step of attaching a traverse unit to a frame of the disk device, a step of attaching a control substrate that controls the disk device to the disk device, a step of electrically connecting a substrate which inputs/outputs a signal to/from a pickup unit provided in the traverse unit and the control substrate, a step of disconnecting short-circuit between an anode electrode and cathode electrode of a laser light-emitting element provided in the pickup unit and an adjusting step of adjusting the pickup unit, wherein the operation of the pickup unit in the adjusting step is controlled using the control substrate, and the control substrate is attached to the disk device in the step of adjusting the pickup unit. According to this arrangement, it is possible to perform adjustment work in a stable manner. Moreover, since no operation such as movement of the control substrate and the like is required, the invention provides excellent operation efficiency.

### BRIEF DESCRIPTION OF THE DRAWINGS

FIG. 1 is a perspective view of a disk device provided with a substrate at the top according to Embodiment 1;
FIG. 2 is a plan view of the disk device provided with a substrate at the top according to Embodiment 1;
FIG. 3 is a plan view of the disk device provided with a substrate at the top without the control substrate according to Embodiment 1;
FIG. 4 is a perspective view of the disk device provided with a substrate at the top before the control substrate is attached according to Embodiment 1;
FIG. 5 is a perspective view of the disk device provided with a substrate at the top with the control substrate removed according to Embodiment 1;
FIG. 6 is a flow chart showing an overview of some of manufacturing steps of the disk device related to Embodiment 1;
FIG. 7 is a bottom view showing an overview of an example of the disk device;
FIG. 8 is a plan view showing an overview of only the mechanism related to a pickup unit of a traverse unit;
FIG. 9 is a bottom view showing an overview of only the mechanism related to the pickup unit of the traverse unit;
FIG. 10 is a side view showing an overview of only the mechanism related to the pickup unit of the traverse unit;
FIG. 11 is a perspective view showing an overview of the pickup unit and pickup substrate, and an enlarged view of a solder short-circuit portion on the pickup substrate;
FIG. 12 is a flow chart showing an overview of some of manufacturing steps of the disk device related to Embodiment 2;
FIG. 13 is a perspective view of the disk device provided with a substrate at the top before the control substrate is attached according to Embodiment 3; and
FIG. 14 is a flow chart showing an overview of a conventional example of manufacturing steps of a disk device.

### DETAILED DESCRIPTION OF THE PREFERRED EMBODIMENTS

Now, with reference to the attached drawings, embodiments of the present invention will be explained. Please note that the following embodiments are merely examples of the present invention and not intended to limit the invention to within the scopes thereof.

### [Embodiment 1]

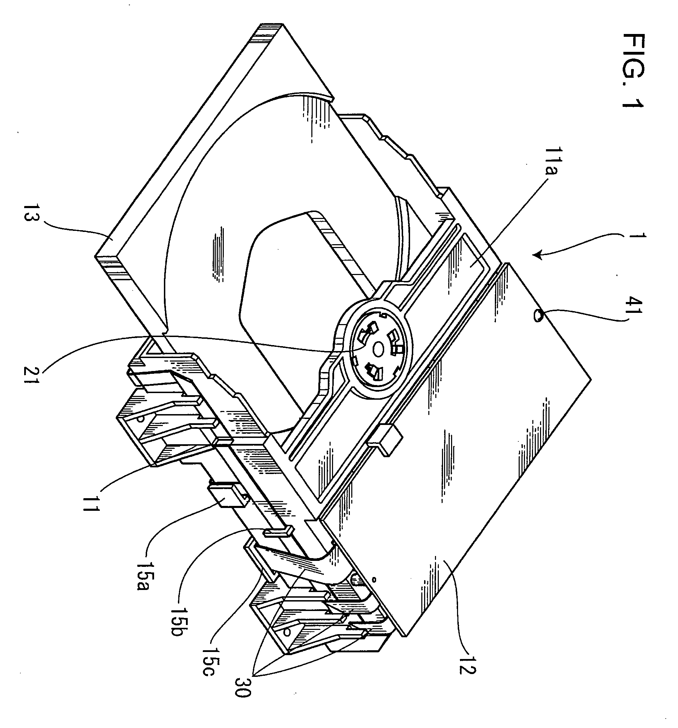

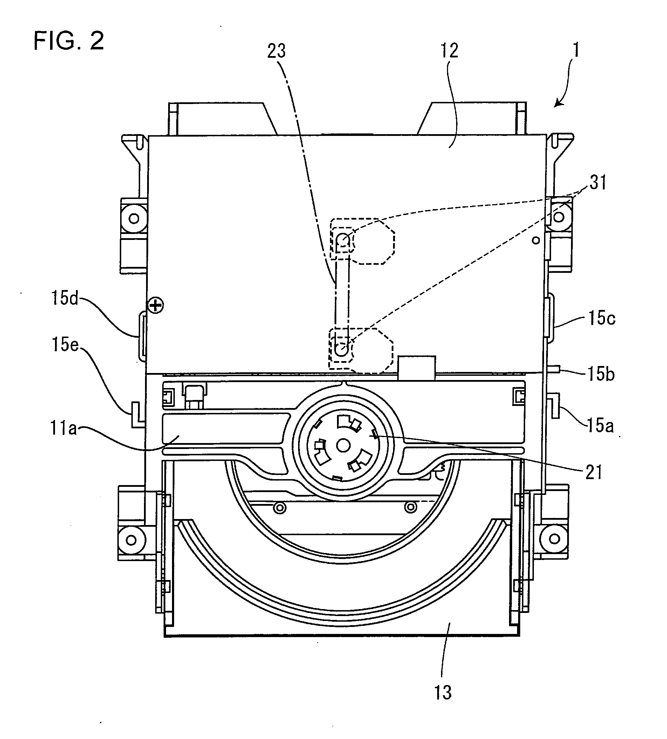

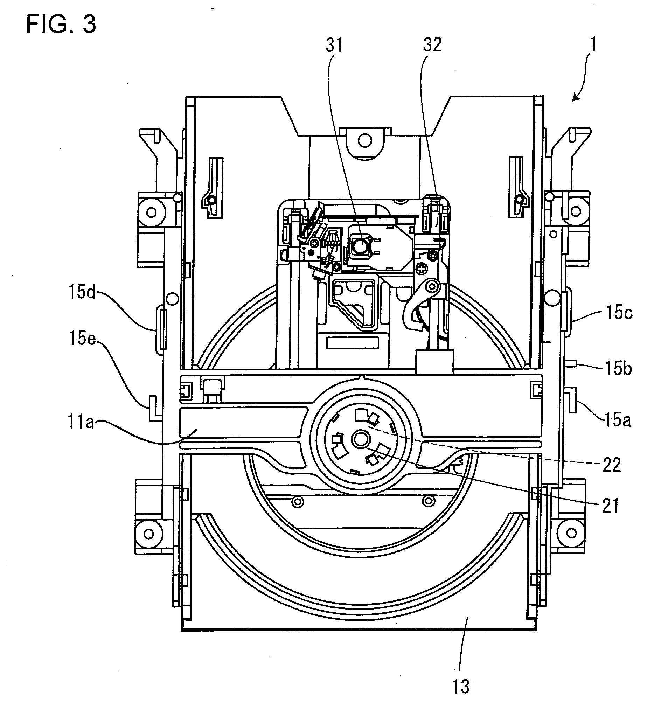

FIG. 1 is a perspective view of a disk device provided with a substrate at the top according to this embodiment, FIG. 2 is a plan view of the same, and FIG. 3 is a plan view without the control substrate 12. As shown in FIG. 1, the disk device 1 provided with the substrate at the top (hereinafter simply referred to as "disk device 1") has the control substrate 12 whose whole body is mostly placed at the top of a resin frame 11 and a tray 13 on which to place a disk is set in a frame 11 in a slidable manner. A support section 11a for supporting a clamper 21 is formed integral with the frame 11. Further, as shown in FIG. 2 and FIG. 3, the disk device 1 is provided with a pickup unit 31, traverse unit 32, and the like, and a turn table 22 and a spindle motor (not shown) for rotating the turn table 22 and the like, are provided below the clamper 21. The control substrate 12 controls the traverse unit 32 of the disk device 1 or the spindle motor and the like, or signals input/output from/to the pickup unit 31, and though simplified in the figure, the structure thereof consists of various electric/electronic parts mounted on a print board on which a circuit pattern is printed.

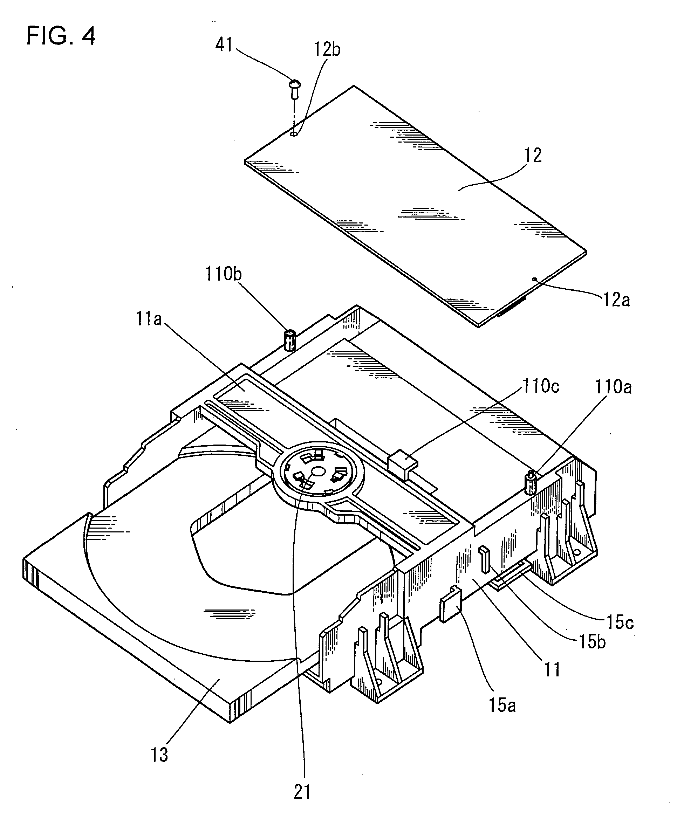

FIG. 4 is a perspective view showing a state before the control substrate 12 is attached to the disk device 1. A projection 110a to be fitted into a mounting hole 12a formed in the control substrate 12 is provided at the top end of one side wall of the frame 11 and a boss 110b for fixing the control substrate 12 with a screw through amounting hole 12b is provided at the top end of the other side wall. Furthermore, the support section 11a is provided with a substrate support section 110c for fixing the control substrate 12.

Since the above described arrangement allows the control substrate 12 to be firmly fixed to the frame 11 by only a screw 41, it is possible to reduce man-hours during manufacturing of the disk device 1 and man-hours in maintenance and repair. Furthermore, since the control substrate 12 remains exposed even when the disk device 1 is set in the electrical equipment, it is not necessary to remove the disk device 1 itself from the electrical equipment in inspection/adjusting steps related to the control substrate 12 and working steps of maintenance and repair in manufacturing steps of the electrical equipment with the disk device 1 built-in, and since it is also possible to simply inspect the control substrate 12 from above the disk device, it is not necessary to provide any jig substrate and the like for inspection separately or shorten the manufacturing steps and reduce cost or shorten/simplify working steps in maintenance and repair and the like.

Furthermore, as shown in FIG. 2, since the control substrate 12 has an area covering a range of irradiation 23 of laser light irradiated by the pickup unit 31, it is possible to effectivelyprevent accidents that the operator may directly view the laser light by mistake. Particularly, since the recording type disk device has high laser output, which is dangerous, and the laser output tends to increase for doubling the recording speed in recent years, it is effective and necessary to prevent laser from directly irradiating the outer side of the disk device in this way. Furthermore, since the pickup unit 31 is covered with the control substrate 12, it can also be dust-proven at the same time.

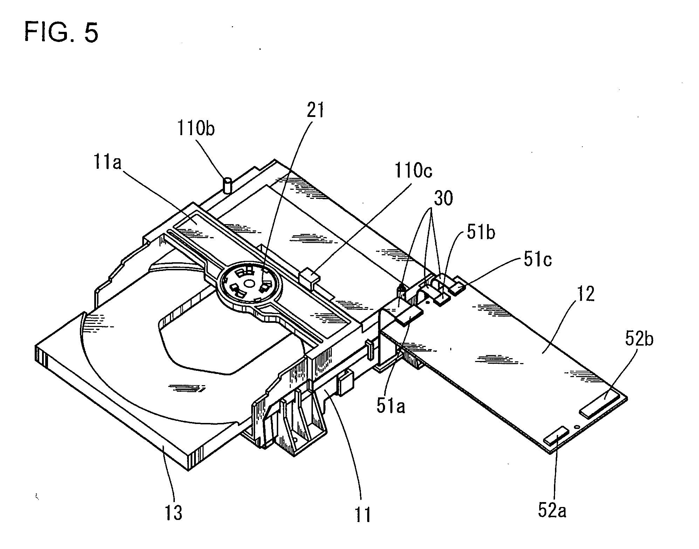

Wire processing sections 15a, 15b, 15c, 15d, 15e which are cable holding means are provided on sides of the side walls of the frame 11. In this embodiment, the wire processing sections 15a, 15b, 15c, 15d, 15e are formed integral with the frame 11. Furthermore, as shown in FIG. 1 and FIG. 5, the control substrate 12 is provided with connection terminals 51a, 51b, 51c for connecting flat cables 30 to transmit signals for controlling the traverse unit 32 of the disk device 1 or the spindle motor and the like or signals input/output to/from the pickup unit 31 concentrated on one side of the disk device 1 when the control substrate 12 is attached to the disk device 1. Furthermore, the control substrate 12 is provided with terminals 52a, 52b for connections with the power supply substrate concentrated on the other side of the disk device 1.

In the above described arrangement, the flat cables 30 connected to the control substrate 12 are held and fixed by the wire processing sections 15a, 15b, 15c, 15d, 15e, and therefore, it is possible to prevent the problem that the wires may contact the heat-generating part or movable part in the electrical equipment in which the disk device is built-in, causing trouble. Furthermore, as shown in FIG. 5, concentrating the flat cables 30 related to inputs/outputs between the control substrate 12 and disk device 1 on one side of the disk device 1 facilitates attachment/detachment of the control substrate 12 when the disk device 1 is adjusted.

In this embodiment, a tray type disk device has been described, however, the present invention is not limited to this embodiment and it is also applicable to a slot-in type disk device which loads a disk into the device using a loading roller or a changer type disk device which can house plurality of disks in the device.

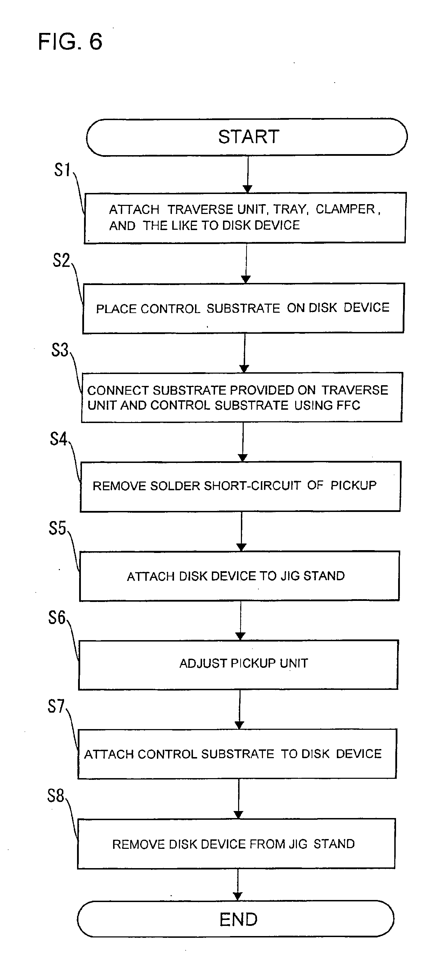

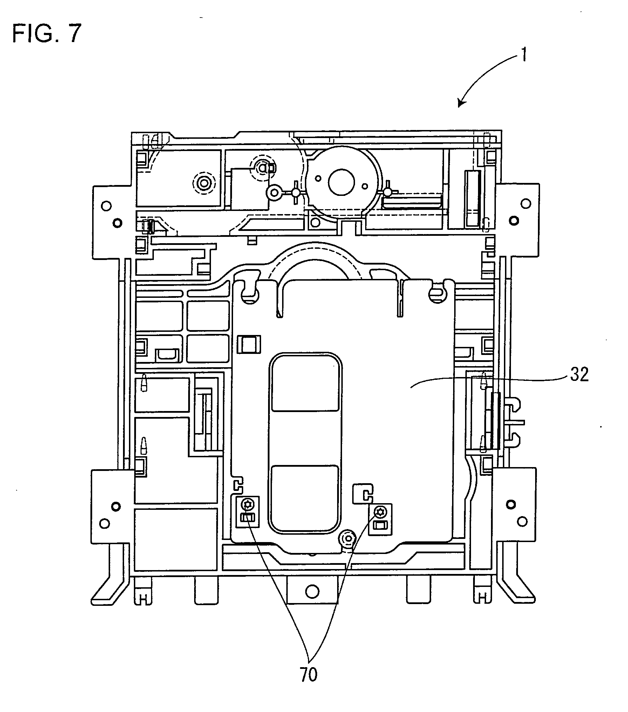

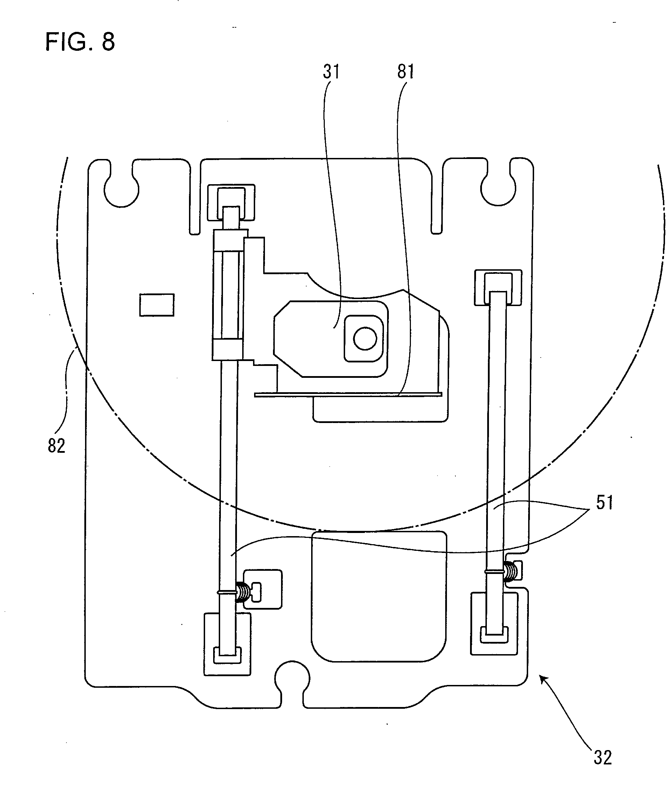

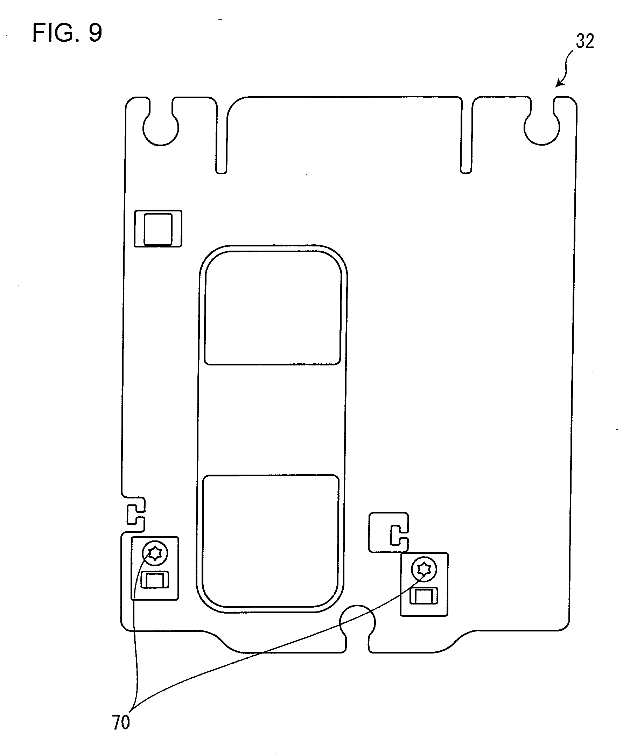

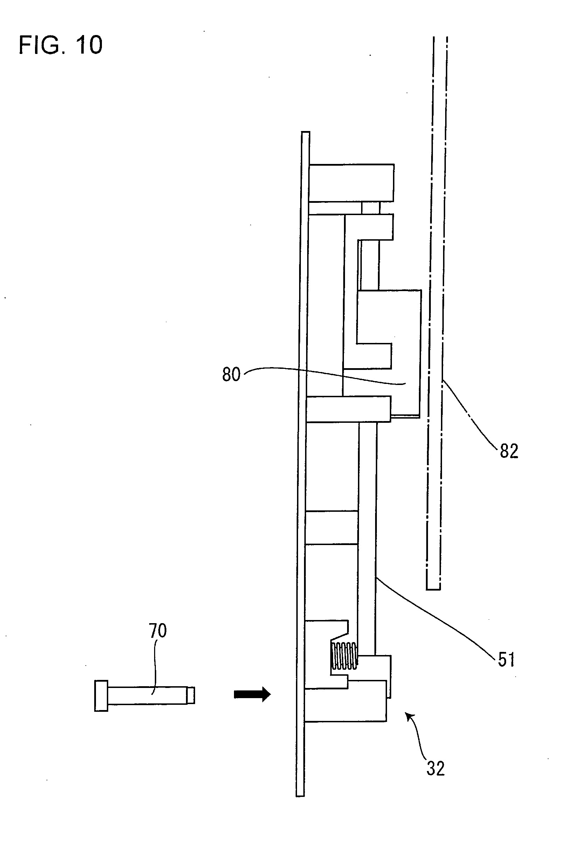

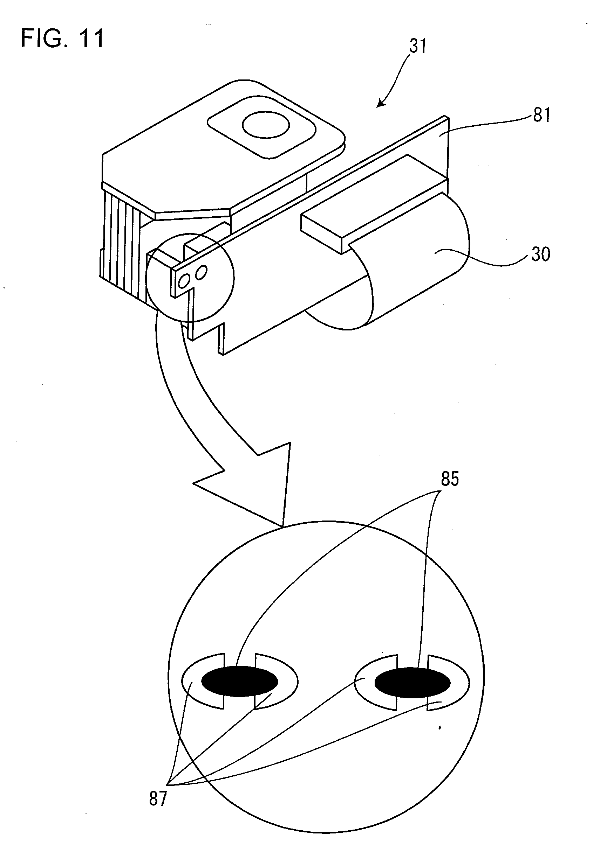

Next, the step of adjusting the disk device according to the present invention will be explained with reference to FIG. 6 through FIG. 11. FIG. 6 is a flow chart showing an overview of some of manufacturing steps of the disk device related to this embodiment, FIG. 7 is a bottom view of the same, FIG. 8 is a plan view showing an overview of only a mechanism related to the pickup unit of the traverse unit, FIG. 9 is a bottom view of the same, FIG. 10 is a side view of the same, and FIG. 11 is a perspective view showing an overview of the pickup unit and pickup substrate, and an enlarged view of solder short-circuit on the pickup substrate.

As described above, the disk device 1, which is a specific example to which the manufacturing method of this embodiment is applicable is provided with the control substrate 12 placed at the top of the frame 11 which is generally made of resin, the tray 13 on which to place a disk medium is set in the frame 11 in a slidable manner, and the traverse unit 32. Furthermore, as shown in FIGS. 8 through 10, the traverse unit 32 is provided with guide shafts 51, and the pickup unit 31 is held by the guide shaft 51 in a manner movable to and fro in the radius direction of the disk medium 82. The traverse unit 32 is provided with adjusting screws 70 for adjusting the distance and angle of the guide shaft 51 with respect to the disk medium 82, and by tightening or loosening the adjusting screws 70, it is possible to adjust the distance and angle of the pickup unit 31 held by the guide shaft 51 with respect to the disk medium 82. Furthermore, as shown in FIG. 11, the pickup substrate 81 is provided with short-circuit patterns 87 for short-circuiting the anode electrode and cathode electrode of a laser light-emitting element (two patterns for CD and for DVD in this embodiment) provided in the pickup unit 31 and when there are solder short-circuits 85, solder and the anode electrode and cathode electrode of the laser light-emitting element are short-circuited. The control substrate 12 in this embodiment is a substrate which controls a driving motor and the like provided in the disk device 1 or controls signals input/output to/from the pickup unit 31.

An overview of the manufacturing steps of the disk device of this embodiment will be explained with reference to a flow chart mainly shown in FIG. 6. In step S1, the traverse unit 32, tray 13, clamper 21, and the like are attached to the disk device 1. This attachment is done by attaching the respective components to the frame 11 of the disk device 1. Next, the control substrate 12 is placed at the top of the disk device 1 (simply placed and not screwed) (step S2) and the substrate (pickup substrate 81 and the like) provided in the traverse unit 32 and the control substrate 12 are connected using the flat cables 30 and the like (step S3). Next, the solder short-circuits 85 on the pickup substrate 81 are removed (step S4) and the disk device 1 is attached to the jig stand (not shown) (step S5). The order of step S2 and step S3 can be reversed (step S2 can be performed after step S3). Likewise, the order of step S4 and step S5 can also be reversed. Furthermore, step S5 can also be performed after step S1.

The jig stand in this embodiment includes a place to attach the control substrate 12 next to the place where the disk device 1 is attached and the disk device 1 is attached to the jig stand as shown in FIG. 5. The jig stand is provided with a jig to turn adjusting screws 70 from the bottom of the disk device 1 and also a test pin to input/output signals to/from the control substrate 12. In this way, the distance and angle of an objective lens provided in the pickup unit 31 with respect to the disk medium 82 are adjusted with the disk device 1 attached to the jig stand, and by contacting the test pin to the circuit on the control substrate 12 and inputting/outputting signals, it is possible to rotate the adjusting screw 70 as appropriate (step S6).

When the adjustment of the pickup unit 31 is completed, the control substrate 12 is attached to the disk device 1 by fixing the control substrate 12 to the frame 11 using the screw 41 (step S7), and then, the disk device 1 is removed from the jig stand (step S8). The order of steps S7 and S8 can be reversed (step S7 can be performed after step S8).

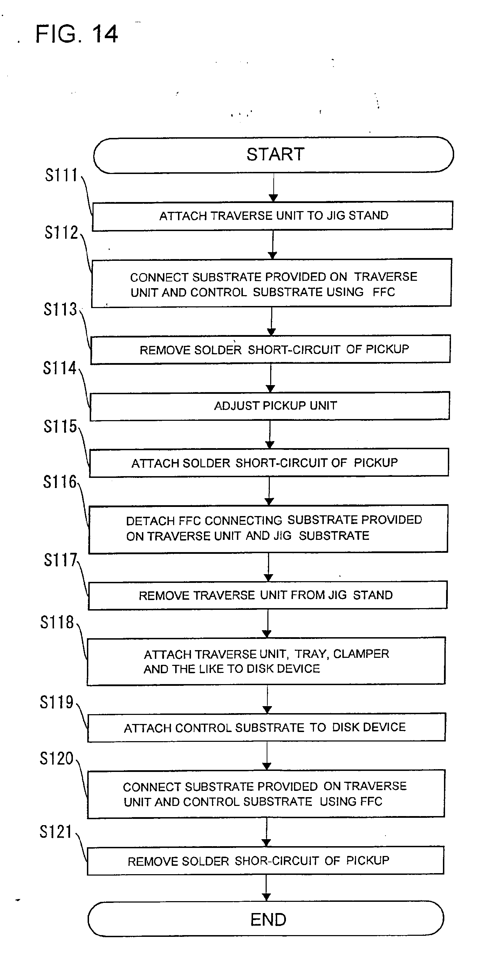

As described above, according to the manufacturing method of this embodiment, there is no need for a jig substrate which is conventionally required as a substitute for the control substrate 12 in the adjusting step of the pickup unit 31, which reduces cost. Furthermore, compared to the conventional manufacturing steps shown in FIG. 14, since there are no steps of attachment/detachment of the flat cables 30 between a substrate (pickup substrate 81 and the like) provided in the traverse unit 32 and jig substrate in step S112 and step S116 and no steps of attachment/detachment of the solder short-circuits 85 on the pickup substrate 81 in step S113 and step S115, it is possible to drastically reduce the working steps and time. Furthermore, according to this embodiment, the step of attachment/detachment of the solder short-circuits 85 on the pickup substrate 81 can be done by performing the attachment/detachment step of the solder short-circuit 85 in step S4 only one time, and therefore it is possible to reduce the possibility of deterioration or damage of the pickup substrate 81 and the like. Furthermore, since the pickup unit 31 is adjusted with the traverse unit 32 attached to the disk device 1, compared to the case where the pickup unit 31 is adjusted by the traverse unit 32 alone and then the traverse unit 32 is attached to the disk device 1, no attachment error is produced and the adjustment accuracy is improved.

This embodiment has been explained with a tray type disk device as an example to which the method of manufacturing a disk device according to this embodiment is applicable, however, not limited to this, the present invention can be applicable to a slot-in type disk device which loads a disk into the device using a loading roller or a changer type disk device capable of loading a plurality of disks into the device.

### [Embodiment 2]

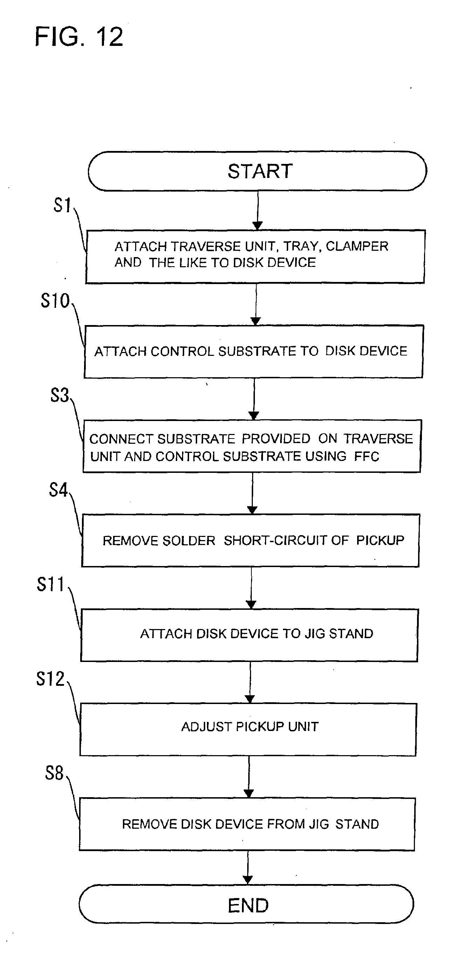

FIG. 12 is a flow chart showing an overview of some of manufacturing steps of a disk device related to this embodiment. The same components as those in Embodiment 1 are assigned, therefore the same reference numbers and explanations thereof will be omitted here. Further, the disk device in Embodiment 1 is adopted so an example to be used in the manufacturing method of this embodiment of the disk device will be explained by the same reference numbers assigned as those in Embodiment 1.

The jig stand (not shown) in this embodiment is provided with a jig to turn the adjusting screws 70 from the bottom of the disk device 1 and a test pin to input/output signals to/from the control substrate 12 to descend from above the disk device 1 provided on the jig stand and contacts the circuit on the control substrate 12 attached to the top of the disk device 1. In this way, the distance and angle of the pickup unit 31 with respect to the disk medium 82 are adjusted with the control substrate 12 attached to the disk device 1 (state in FIG. 1) and with the disk device 1 attached to the jig stand, and by contacting the test pin of the jig stand to the circuit on the control substrate 12 and inputting/outputting signals, it is possible to turn the adjusting screws 70 as appropriate (step S12).

By using the above described jig stand, it is possible to attach the control substrate 12 to the disk device 1 before the adjusting step of the pickup unit 31. In this embodiment, the control substrate 12 is fixed to the disk device 1 using the screw 41 in step S10. By so doing, it is possible to simplify the step of attaching the disk device 1 to the jig stand (step S11), reduce man-hours and attach the control substrate 12 to the disk device 1 in an early stage, thereby enabling to perform adjustment work in a stable condition. Like in Embodiment 1, the order of step S1 and step S10 can be reversed (step S1 can be performed after step S10) or the order of step S10 and step S3 or the order of step S4 and step S11 can be also reversed.

This embodiment has been explained where the method of manufacturing the disk device of the present invention is applied to the disk device provided with the control substrate at the top of the frame, however, not limited to this, the present invention can be also effectively applied to a disk device whose control substrate is disposed at the bottom of the disk device or on a side by adapting the jig stand thereto.

### [Embodiment 3]

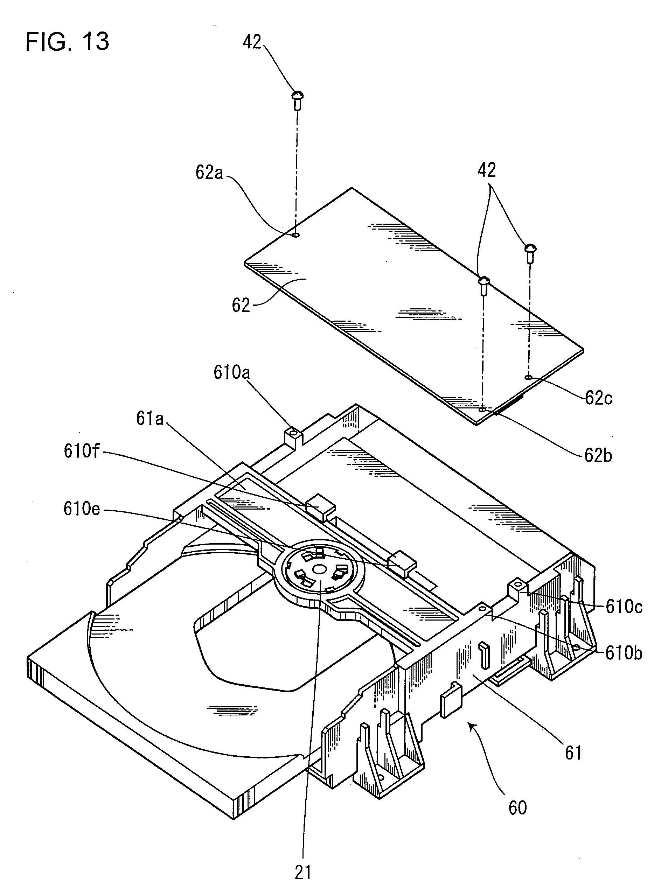

FIG. 13 is a perspective view before a control substrate 62 is attached to a disk device 60 and a modified example of the attaching arrangement of the control substrate 62 to be fixed to the top of a frame 61 will be explained with reference to FIG. 13. The same components as those in Embodiment 1 are assigned, therefore the same reference numbers as those in Embodiment 1 and explanations thereof will be omitted here. Further, the disk device in Embodiment 1 is adopted as an example of this embodiment and the disk device will be explained by the same reference numbers as those in Embodiment 1.

Bosses 610a, 610b, 610c for fixing the control substrate 62 through mounting holes 62a, 62b, 62c are provided at top ends of side walls on both sides of the frame 61. Furthermore, a support section 61a is provided with substrate support sections 610e and 610f for fixing the control substrate 62. Other components are the same as those in Embodiment 1, and therefore, explanations thereof will be omitted here.

According to the above described arrangement, the control substrate 62 contacts the top surfaces of the bosses 610a, 610b, and 610c provided at the top ends of the side walls of the frame 61 widely, fixed by the substrate support sections 610e, 610f, and the control substrate 62 and is further fixed to the frame 61 by three screws 42. In this way, the control substrate 62 and frame 61 are joined together more firmly. Therefore, the disk device 60 has high rigidity and can prevent operation faults of the device due to deflections and torsion. Furthermore, with reduced deflections and torsion, it is possible to minimize play in the movable parts and make the disk device 60 as small as possible.

## Claims

1. A disk device comprising a pickup unit which reads, reproduces, or records information from/onto a disk medium, a traverse unit, a turn table which rotates/drives the disk medium, a spindle motor which rotates the turn table, and the like, in which all these components being assembled in a frame, wherein a control substrate which controls the traverse unit or the spindle motor or a signal input/output to/from the pickup unit is provided at the top of the disk device.

2. The disk device provided with the substrate at the top according to claim 1, wherein the range of irradiation with laser light irradiated by at least the pickup unit is covered with the control substrate.

3. The disk device provided with the substrate at the top according to claim 1 or 2, wherein one or a plurality of projections to be fitted into holes formed in the control substrate are provided at top ends of one or both side walls of the frame and one or a plurality of bosses for fixing the control substrate with screws are provided at top ends of the other side wall or both side walls of the frame.

4. The disk device provided with the substrate at the top according to claim 3, wherein a support section for supporting a clamper is formed in the frame and the support section is provided with a substrate support section for fixing the control substrate.

5. The disk device provided with a substrate at the top according to any one of claims 1 to 4, wherein a side wall of the frame is provided with cable holding means for holding a wire for connecting the control substrate to a power supply substrate or other control substrate, and the like.

6. The disk device provided with the substrate at the top according to claim 5, wherein flat cables for inputs/outputs between the control substrate and the disk device are concentrated on one side of the frame and flat cables for inputs/outputs between the control substrate and power supply substrate are concentrated on the other side.

7. A method of manufacturing a disk device which reads, reproduces, or records information from/onto a disk medium with a simplified adjusting step, comprising a step of electrically connecting a substrate which inputs/outputs a signal to/from a pickup unit provided in a traverse unit set in the disk device and a control substrate which controls the disk device, a step of disconnecting short-circuit between an anode electrode and cathode electrode of a laser light-emitting element provided in the pickup unit, and an adjusting step of adjusting the pickup unit, wherein the operation of the pickup unit in the adjusting step is controlled using the control substrate.

8. A method of manufacturing a disk device which reads, reproduces, or records information from/onto a disk medium with a simplified adjusting step, comprising a step of attaching the traverse unit to the frame, a step of placing the control substrate at the top of the disk device, a step of electrically connecting a substrate which inputs/outputs a signal to/from a pickup unit provided in the traverse unit and the control substrate, a step of disconnecting short-circuit between an anode electrode and cathode electrode of a laser light-emitting element provided in the pickup unit, and an adjusting step of adjusting the pickup unit, wherein the operation of the pickup unit in the adjusting step is controlled using the control substrate.

9. A method of manufacturing a disk device which reads, reproduces, or records information from/onto a disk medium with a simplified adjusting step, comprising a step of attaching a traverse unit to a frame of the disk device, a step of attaching a control substrate that controls the disk device to the disk device, a step of electrically connecting a substrate which inputs/outputs a signal to/from a pickup unit provided in the traverse unit and the control substrate, a step of disconnecting short-circuit between an anode electrode and cathode electrode of a laser light-emitting element provided in the pickup unit, and an adjusting step of adjusting the pickup unit, wherein the operation of the pickup unit in the adjusting step is controlled using the control substrate.
